Europäisches Patentamt

European Patent Office

Office européen des brevets

(11) Veröffentlichungsnummer: **0 039 766**
**A1**

(12) **EUROPÄISCHE PATENTANMELDUNG**

(21) Anmeldenummer: **81101873.8**

(22) Anmeldetag: **13.03.81**

(51) Int. Cl.³: **F 16 B 37/00**

(30) Priorität: **09.05.80 DE 3017749**

(43) Veröffentlichungstag der Anmeldung:
**18.11.81 Patentblatt 81/46**

(84) Benannte Vertragsstaaten:
**AT BE CH FR GB IT LI NL**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h. c.**
**Weinhalde 34**
**D-7244 Waldachtal 3/Tumlingen(DE)**

(54) **Befestigungsvorrichtung für die Befestigung von Sanitärgegenständen.**

(57) Die Befestigungsvorrichtung besteht aus einer Bundmutter (3) und einer Stockschraube (6) mit zwei Gewindeabschnitten, wovon der eine Abschnitt in einen in der Wand eingesetzten Dübel (8) zu dessen Verankerung eingreift und der andere Abschnitt die Bundmutter (3) trägt. Für die Befestigung von an den Befestigungsflächen Durchbrüche und rechtwinklig zur Achse der Durchbrüche eine Öffnung aufweisenden Sanitärgegenständen weisen die Durchbrüche einen wenigstens dem Außenmaß der Bundmutter entsprechenden erweiterten und daran anschließend einen verengten Abschnitt auf. Zum Anziehen der Bundmutter nach dem Einhängen des Sanitärgegenstandes ist die Bundmutter mit einem Zahnkranz (15) versehen, in den ein durch die Öffnung antreibbares Getriebeelement (13) eingreift, das in einer auf der Bundmutter axial fixierten, gegen die Bundmutter verdrehbaren Hülse (10) abgestützt ist.

FIG.1

EP 0 039 766 A1

EP    1420

### Befestigungsvorrichtung für die Befestigung von Sanitärgegenständen

Die Erfindung betrifft eine Befestigungsvorrichtung bestehend aus einer Bundmutter und einer Stockschraube mit zwei Gewindeabschnitten, wovon der eine Abschnitt in einen in der Wand eingesetzten Dübel zu dessen Verankerung eingreift und der andere Abschnitt die Bundmutter trägt, für die Befestigung von an den Befestigungsflächen Durchbrüche und rechtwinklig zur Achse der Durchbrüche eine Öffnung aufweisenden Sanitärgegenständen.

Die Befestigung von Sanitärgegenständen mit einer Bundmutter setzt voraus, daß die Bundmutter zum Anziehen mit einem Schraubenschlüssel von außen her zugänglich ist. Dies ist dadurch erreichbar, daß die Befestigungsstellen in Einbuchtungen der Außenkontur des Sanitärgegenstandes verlegt sind. Aus ästhetischen Gründen wird jedoch eine Befestigung gefordert, die keine die äußere Form der Sanitärgegenstände beeinträchtigende Vorkehrungen erforderlich macht, und die von außen nicht sichtbar ist. Ferner muß die Befestigung zum Auswechseln von evtl. beschädigten Gegenständen lösbar sein.

Der Erfindung liegt die Aufgabe zugrunde, eine Befestigungsvorrichtung zu schaffen, die diese vorstehend erwähnten Forderungen erfüllt.

Erfindungsgemäß wird dies dadurch erreicht, daß die Durchbrüche einen wenigstens dem Außenmaß der Bundmutter entsprechenden erweiterten und daran anschließend einen verengten Abschnitt aufweisen, und daß die Bundmutter mit einem Zahnkranz versehen ist, in den ein durch die Öffnung antreibbares Ge-

EP 1420

triebeelement eingreift, das in einer auf der Bundmutter axial fixierten, gegen die Bundmutter verdrehbaren Hülse abstützbar ist.

Nach der Montage und Verankerung der Stockschraube wird die Bundmutter so weit aufgedreht, bis zwischen dem Bund der Mutter und der Mauerwerksoberfläche ein Abstand erreicht ist, der etwas größer ist als die Scherbendicke des zu befestigenden Santitärgegenstandes. Danach wird der Sanitärgegenstand über diese Bundmutter gestülpt und gleichzeitig verschoben, so daß die Stockschraube bzw. ein an der Bundmutter vorgesehener Schaft in die Verengung des Durchbruches eingreift. Zum Anziehen der Bundmutter und Festspannen des Sanitärgegenstandes wird durch die im rechten Winkel zur Achse der Durchbrüche angeordnete Öffnung ein Werkzeug eingeschoben, an dessen vorderen Ende das Getriebeelement angeordnet ist. Die Spitze des Werkzeuges greift dabei in eine Lagerstelle ein, die sich an einer auf der Bundmutter axial fixierten Hülse angeordnet ist. Die Lagerstelle ist so gesetzt, daß mit dem Eingriff der Werkzeugspitze gleichzeitig auch der Zahneingriff des auf dem Werkzeug angeordneten Getriebeelementes in den Zahnkranz der Bundmutter erreicht ist. Durch Drehen des Werkzeuges kann nunmehr die Bundmutter auf die Stockschraube aufgeschraubt, und damit der Sanitärgegenstand befestigt werden. Nach Beendigung des Schraubvorganges wird das Werkzeug abgezogen und die Öffnung ggf. mit einer Abdeckkappe verschlossen.

Bis auf die Öffnung zum Einfahren des Werkzeuges sind keine die äußere Form der Sanitärgegenstände beeinträchtigende Vorkehrungen für die Befestigung erforderlich. Die Befestigungsvorrichtung befindet sich in der Aushöhlung des Sanitärgegenstandes und ist somit nicht sichtbar.

EP 1420

In einer weiteren Ausgestaltung der Erfindung kann das Getriebeelement an seinem aus der Öffnung des Sanitärgegenstandes ragenden Schaftteil mit einer Kurbel, Handgriff oder dgl. versehen sein. Ferner kann das Getriebeelement als Stirn- oder Kgelzahnrad ausgebildet sein. Mit diesen Maßnahmen ist es in einfacher Weise möglich, das für das Festziehen der Bundmutter notwendige Drehmoment aufzubringen.

Schließlich kann in einer weiteren Ergänzung der Erfindung die Hülse an ihrem Umfang mehrere sternförmig angeordnete Lagerbohrungen bzw. Lagerbolzen aufweisen, deren Achsen sich mit der Achse der Stockschraube kreuzen.

Vor dem Einhängen des Sanitärgegenstandes ist es zweckmäßig, die Hülse so zu drehen, daß die Lagerbohrung bzw. der Lagerbolzen zur Öffnung hin gerichtet ist. Durch die Anordnung mehrerer Lagerstellen an der Hülse soll das Einfädeln des Werkzeuges in die Lagerstelle dann erleichtert werden, wenn sich die Hülse unbeabsichtigt verdreht hat.

In der Zeichnung ist ein Ausführungsbeispiel der Erfindung dargestellt.

Es zeigen:

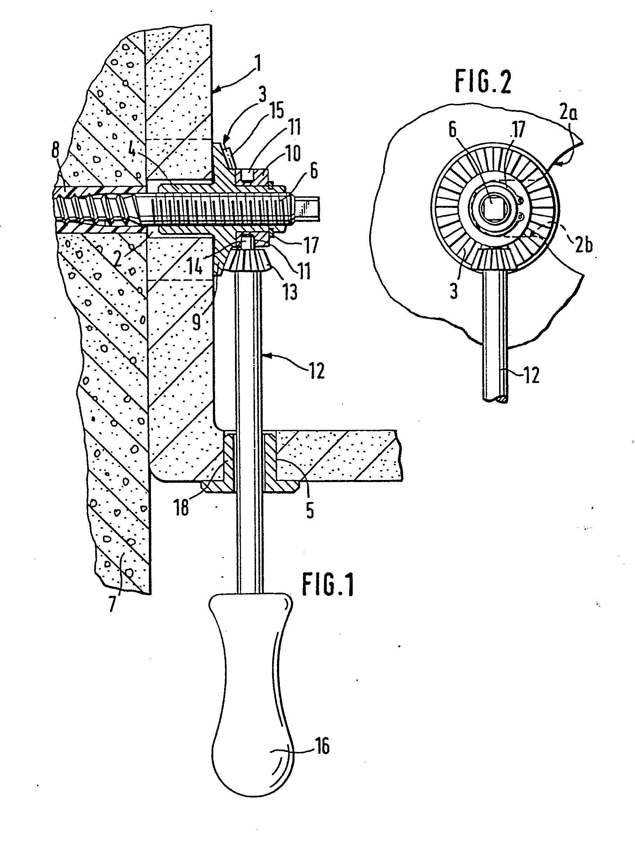

Figur 1    die Befestigungsvorrichtung im Schnitt

Figur 2    eine Frontansicht der Befestigungsvorrichtung

Der hohl ausgebildete Sanitärgegenstand 1 weist in seiner Befestigungsfläche wenigstens einen Durchbruch 2 mit zwei Abschnitten 2 a, 2 b auf, wobei der erweiterte Abschnitt 2 a etwas größer ist als das Außenmaß der Bundmutter 3 und der engere Abschnitt 2 b etwa dem Außendurchmesser des Schafttei-

EP 1420

les 4 der Bundmutter 3 entspricht. Im rechten Winkel zur Achse des Durchbruches 2 ist eine weitere Öffnung 5 in der Aussenwandung des Sanitärgegenstandes 1 vorgesehen. Nach der Montage und Verankerung der Stockschraube 6 in der Wand 7 mittels eines Dübels 8 wird auf den die Wand überragenden Gewindeabschnitt der Stockschraube 6 die Bundmutter 3 so weit aufgedreht, bis der Abstand zwischen dem Bund 9 der Mutter und der Wandoberfläche geringfügig größer ist als die Dicke der Wandung des Sanitärgegenstandes 1. Gleichzeitig wird die auf dem zylindrischen Teil der Bundmutter 3 angeordnete Hülse 10 so gedreht, daß die Achse einer der an der Hülse 10 angeordneten Lagerstellen 11 zu der Öffnung 5 in der Außenwandung des Sanitärgegenstandes gerichtet ist. Nach dem Überstülpen und Einhängen des Sanitärgegenstandes 1 auf dem Schaftteil 4 der Bundmutter 3, wird das Werkzeug 12 durch die dem Außenmaß des auf dem Werkzeug angeordneten Kegelzahnrades 13 entsprechende Öffnung 5 eingeführt. Durch den Eingriff des am Werkzeug 12 angeordneten Lagerzapfens 14 in die zur Öffnung 5 gerichteten Lagerbohrung 11 der Hülse 10 ergibt sich gleichzeitig auch der Zahneingriff des auf dem Werkzeugschaft angeordneten Kegelzahnrades 13 mit dem Kegelzahnkranz 15 der Bundmutter 3. Durch Drehen am Handgriff 16 des Werkzeuges 12 wird auf die Bundmutter ein Drehmoment übertragen, das über die axiale Bewegung der Bundmutter 3 auf der Stockschraube zu einer Verspannung des Sanitärgegenstandes 1 führt. Durch die axiale Fixierung der Hülse 10 bspw. mittels eines Federringes 17 auf dem zylindrischen Teil der Bundmutter 3 macht die Hülse 10 die Axialbewegung der Bundmutter während des Verspannvorganges mit. Damit ist der Zahneingriff während des Schraubvorganges sichergestellt. Die in Umfangsrichtung wirkende Kraftkomponente wird durch die Anlage des Werkzeugschaftes an der Öffnung 5 aufgenommen. Durch die Verdrehbarkeit der Hülse 10 gegenüber der Bundmutter 3 kann sich die Mutter drehen während die Hülse durch das Werkzeug 12 am Mitdrehen gehindert ist.

EP 1420

Um das Ausrichten der Lagerbohrung 11 der Hülse 10 bspw. bei einem unbeabsichtigten Verdrehen der Hülse zu erleichtern, sind am Umfang der Hülse 10 mehrere Lagerbohrungen vorgesehen. Statt Lagerbohrungen kann die Hülse auch Lagerbolzen aufweisen, während in der Stirnseite des Werkzeuges dann die entsprechende Bohrung vorgesehen ist. Zur Befestigung schwerer Sanitärgegenstände sind in der Regel zwei Befestigungsstellen vorgesehen. Nach Abschluß der Befestigung wird das Werkzeug 12 abgezogen und ggf. die Öffnung 5 durch eine Abdeckkappe verschlossen. Zur besseren Abstützung des Werkzeugschaftes in der Öffnung 5 der Außenwandung des Sanitärgegenstandes ist auf dem Werkzeugschaft noch eine Hülse 18 aufgestülpt, die nach dem Ansetzen des Werkzeuges in die Öffnung 5 verschoben wird.

artur fischer forschung

7244 Tumlingen/Waldachtal 3

den 05. Mai 1980

Ju/Woe

– 1 –

EP 1420

## P a t e n t a n s p r ü c h e

1. Befestigungsvorrichtung bestehend aus einer Bundmutter und einer Stockschraube mit zwei Gewindeabschnitten, wovon der eine Abschnitt in einen in der Wand eingesetzten Dübel zu dessen Verankerung eingreift und der andere Abschnitt die Bundmutter trägt, für die Befestigung von an den Befestigungsflächen Durchbrüche und rechtwinklig zur Achse der Durchbrüche eine Öffnung aufweisenden Sanitärgegenständen, dadurch gekennzeichnet, daß die Durchbrüche einen wenigstens dem Außenmaß der Bundmutter entsprechenden erweiterten und daran anschließend einen verengten Abschnitt aufweisen, und daß die Bundmutter mit einem Zahnkranz versehen ist, in den ein durch die Öffnung antreibbares Getriebeelement eingreift, das in einer auf der Bundmutter axial fixierten, gegen die Bundmutter verdrehbaren Hülse abstützbar ist.

EP 1420

2. Befestigungsvorrichtung nach Anspruch 1, dadurch gekennzeichnet, daß das Getriebeelement an seinem aus der Öffnung des Sanitärgegenstandes ragenden Schaftteil mit einer Kurbel, Handgriff oder dgl. versehen ist.

3. Befestigungsvorrichtung nach Anspruch 1, dadurch gekennzeichnet, daß das Getriebeelement als Stirn- oder Kegelzahnrad ausgebildet ist.

4. Befestigungsvorrichtung nach Anspruch 1, dadurch gekennzeichnet, daß die Hülse an ihrem Umfang mehrere sternförmig angeordnete Lagerbohrungen bzw. Lagerbolzen aufweist, deren Achsen sich mit der Achse der Stockschraube kreuzen.

0039766

FIG.2

FIG.1

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 96 319 (SAUL et al.)<br>* Anspruch; Fig. 1 * | 1,3 |
| | DE - U - 7 314 951 (BERNER)<br>* Fig. 1 * | 1 |
| | CH - A - 314 420 (COOKSON)<br>* Fig. 1 * | 1,2,3 |
| | FR - A - 847 141 (BRADSHAW)<br>* Fig. 3 * | 1,2 |
| | FR - A - 2 119 190 (DUCELLIER)<br>* Fig. 3 *<br>& DE - A - 2 162 339 | 1 |
| | US - A - 3 482 481 (NEWELL et al.)<br>* Fig. 1 * | 1,3 |

**KLASSIFIKATION DER ANMELDUNG (Int. Cl.³)**

F 16 B 37/00

**RECHERCHIERTE SACHGEBIETE (Int. Cl.³)**

F 16 B 5/02
F 16 B 12/46
F 16 B 23/00
F 16 B 35/00
F 16 B 37/00
F 16 B 39/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-08-1981 | ZAPP |

EPA form 1503.1 08.78